# EUROPEAN PATENT APPLICATION

(11) **EP 1 119 142 A2**
(43) Date of publication of application: **25.07.2001**
(21) Application number: 01300286.0
(22) Date of filing: 15.01.2001
(51) Int. Cl.: H04L 12/56

(54) **Network node with a queue for long messages**

(30) Priority: 19.01.2000 JP 2000009606
(71) Applicant: NEC Corporation, Minato-ku, Tokyo 108-8001 (JP)
(72) Inventor: Hatano, Shizuka, Minato-ku, Tokyo (JP)
(74) Representative: Abnett, Richard Charles

(57) **Abstract**

A node apparatus such as a router prevents the occupation of a queue by a long message without the need to have a large number of queues. The apparatus is equipped with input interfaces (11,12) a switch (13), and output interfaces (14,15), each containing queues. The node is also equipped, in the input interfaces, with input transmission-message monitoring points (11a,12a), and in the output interfaces, with output transmission-message monitoring points (14b,15b). A counter (16b) counts the length of the messages accumulated in the input and output monitoring points, and a control unit (16) abandons a message when the counted length exceeds a threshold value.

## Description

### BACKGROUND OF THE INVENTION

### 1. Technical Field of the Invention

The present invention relates to a node apparatus and a queuing method for use therein. In particular, the invention relates to a node apparatus for switching an indefinitely long transmission message in the node such as a router or bridge.

### 2. Description of the Prior Art

In recent years, it is important to guarantee the QoS (Quality of Service) which depends upon the transmission message per transmission origin or transfer rate and delay per transmission origin or destination of the transmission message.

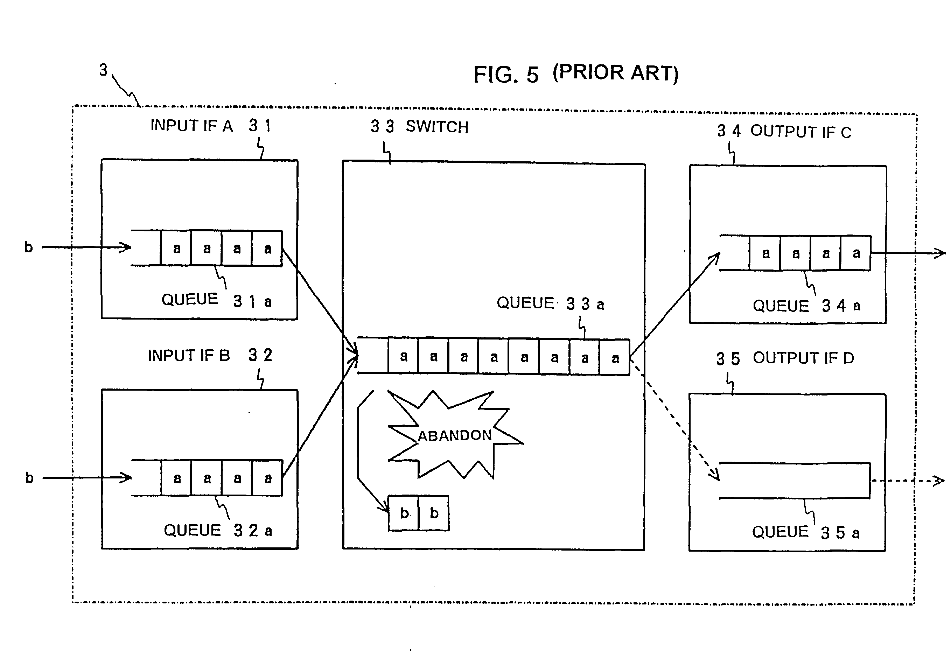

However, most of the node apparatus for switching the messages have not had the above-described function taken into consideration. An example of the construction of such an apparatus will hereafter be explained with reference to Fig. 5. Fig. 5 shows an example of the construction of a known apparatus, in which the whole traffic is kept queued or accumulated in a single memory resource.

In Fig. 5, the node apparatus 3 is constructed of input interface parts (A,B) 31 and 32 that are connected to other communication node apparatus (not shown) via communication paths (not shown), output interface parts (C,D) 34 and 35, and a switch part 33 for switching the received transmission message to a transmission destination's interface.

The interiors of the interface parts 31, 32, 34, and 35 and the interiors of the switch parts 33 are equipped with queues 31a, 32a, 33a, 34a, and 35a that are memories for storing the transmission messages therein. Thereby, the transmission messages are prevented from being destroyed due to the fluctuation in terms of the reception time length of the transmission message received from the transmission path.

In the above-described known node apparatus, there is made up a construction wherein a transmission message is queued or stored with respect to the only queue used therein regardless of the transmission origin or transmission destination of the transmission message. Therefore, under the circumstances that a specified kind of transmission message is received in a large amount, because the specified transmission message occupies the queue, there is the problem that the apparatus is brought to a state of being unable to have other transmission origins / addressees accumulated in its queue. At such a time, that transmission message is wasted away.

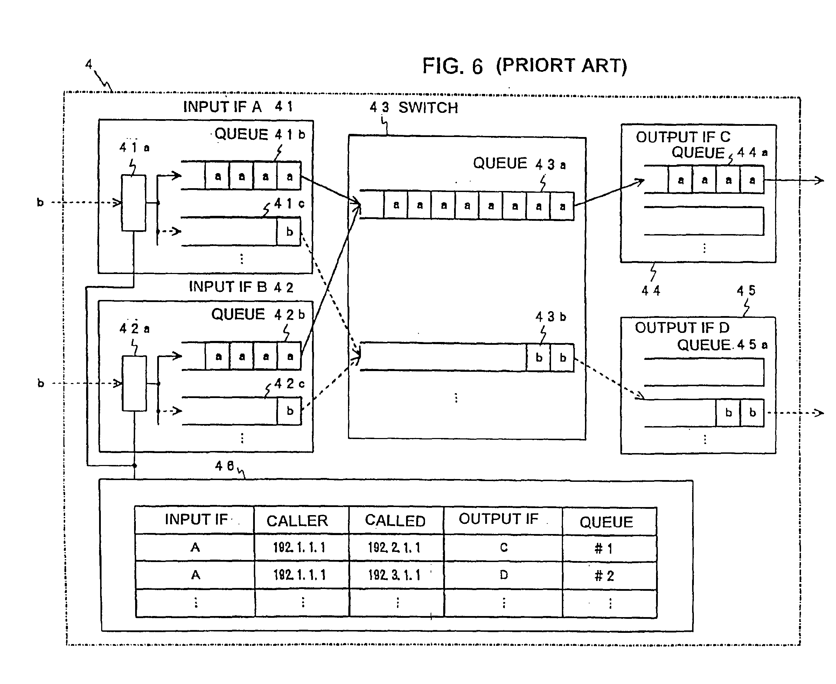

In order to avoid the disadvantage that the queue is occupied by a specified transmission message, an example of the construction wherein queue is disposed per packet flow shown in Fig. 6 has hitherto been proposed. In Fig. 6, a node apparatus 4, as in the case of the construction of the existing node apparatus 3 shown in Fig. 5, has a construction of having the input interface parts (A, B) 41 and 42 and output interface parts (C, D) 44 and 45, the switch part 43, and the queues 41b, 42b, 43a, 44a, and 45a. However, other than the above-described construction, the node apparatus 4 is equipped with queues 41c and 42c, and 43b as well as transmission-message sorting functions 41a and 42a that respectively cause the input interface parts 41 and 42 to queue the transmission messages of specified addressees into the queues 41c and 42c.

Also, in that this node apparatus 4 is equipped with a sorting table 46 for associating the queues, which each queue a relevant transmission message therein, with respect to within-transmission-message addressee information, the node apparatus 4 is different from the existing node apparatus 3.

By the node apparatus being equipped with the above-described function, in the node apparatus 4, even in case a specified transmission message is received in large amount with a high speed, only the queue 41b alone in which the specified transmission message is queued overflows with it, whereby only the specified transmission message is abandoned. The transmission messages having other transmission origins and destinations are each queued in any one of the other separate queues 41c and 42c. Therefore, each of these transmission messages is transferred through the interior of the node apparatus 4 and is then transmitted from the output interface part 45.

In this example, although the above-described problems are solved, it is necessary to prepare a queue in units of a transmission origin / transmission destination of the transmission message. Resultantly, in the recent-year node apparatus that manages the transmission origin / transmission destination information in large amount, it is a disadvantage that the amount of memories actually equipped becomes very large correspondingly to the amount of queues used.

### SUMMARY OF THE INVENTION

Thereupon, the object of the present invention is to solve the above-described points in problem and to provide a node apparatus that can prevent a specified transmission message from occupying the queues without preparing a large amount of queues, and a queuing method for use in such node apparatus.

A node apparatus according to the present invention is one for switching a non-specified length of transmission message, and is equipped with an input monitoring point for monitoring the input of the transmission message, an output monitoring point for monitoring the output of the transmission message, counter for counting the amount of the transmission message accumulated correspondingly to the monitored results of the input monitoring point and the output monitoring point, and means for performing control so that when the counted value of the counter has exceeded a preset threshold value the corresponding transmission message may be abandoned.

A queueing method for messages inputted and outputted from a node apparatus, according to the present invention, comprises the steps of monitoring messages inputted into the node, monitoring messages outputted from the node, counting the length of the messages on the basis of the monitoring, and abandoning a message when the counted value has exceeded a present threshold value.

The node apparatus of the present invention uses the system of managing per flow "each, or an aggregation, of individual transmission messages recognized by a combination of the within-transmission-message information (interface, transmission origin / transmission destination, and the like)" by merely adding a simple counter function to the existing node apparatus. Therefore, it is possible to prevent a specified kind of transmission message from occupying the queues as a whole.

Also, by using the counter function, it becomes unnecessary to prepare a large amount of queues and in hence it becomes possible to reduce the amount of memory used. Further, it becomes possible to specify a management queue by changing the disposition and combination of the input and output transmission-message monitoring points as desired. Furthermore, only by performing setting of the control table as desired, it becomes possible to easily change the managing setting on a scale as measured in units of a flow.

As has been described above, according to the present invention, in the node apparatus in which to switch a non-specified length of transmission message, the node apparatus is arranged as follows. Namely, correspondingly to the monitored results of the input monitoring point for monitoring the input of the transmission message and the output monitoring point for monitoring the output of the transmission message, counting of the amount of transmission message accumulated is performed. Thereby, the operation of the node apparatus is controlled so that when this counted value has exceeded a preset threshold value the relevant transmission message may be abandoned. As a result of this, the node apparatus of the invention has the effect of enabling preventing the occupation of the queue by a specified kind of transmission message without preparing a large amount of queues.

### BRIEF EXPLANATION OF THE DRAWINGS

Fig. 1 is a block diagram showing the construction of a node apparatus according to an embodiment of the present invention.

Fig. 2 is a flowchart showing the operation of the node apparatus 1 according to the embodiment of the present invention.

Figs. 3A to 3D each are diagrams each showing an example of the definition made in the control table of Fig. 1.

Fig. 4 is a block diagram showing the construction of a node apparatus according to another embodiment of the present invention.

Fig. 5 is a block diagram showing an example of the construction of a node apparatus according to the prior art.

Fig. 6 is a block diagram showing another example of the construction of the node apparatus according to the prior art.

### PREFERRED EMBODIMENT OF THE INVENTION

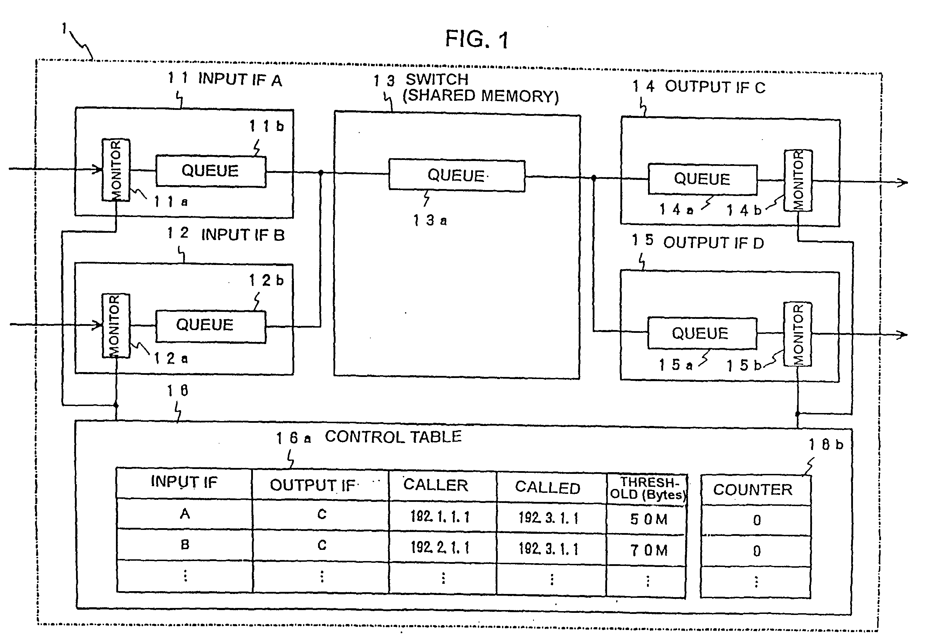

One of the embodiments of the present invention will be explained with reference to Fig. 1.

Fig. 1 is a block diagram showing the construction of a node apparatus according to an embodiment of the present invention. In Fig. 1, a node apparatus 1 is equipped, as in the case of the existing node apparatus 3 shown in Fig. 5, with input interface parts (A, B) 11 and 12, a switch part 13, output interface parts (C, D) 14 and 15, and queues 11b, 12b, 13a, 14a, and 15a. The node apparatus thereby serves to switch a non-specified length of transmission message (packet) such as a router/bridge, and the like.

However, unlike the existing node apparatus 3 shown in Fig. 5, the node apparatus 1 according to the embodiment of the present invention is interiorly equipped with input transmission-message monitoring points 11a and 12a and output transmission-message monitoring points 14b and 15b. The node apparatus 1 is also equipped, within a switch controller 16, with a control table 16a with reference to which the flow is associated with inside-transmission-message information and a per-flow counter 16b for counting the transmission message in units of a flow. By this equipping, the transmission message is managed in such a way as to provide threshold values (the upper limit values as set) within the control table 16a and to compare these threshold values with the counted values of the per-flow counter 16b.

By the above-described function being equipped to it, in the node apparatus 1, in case a specified type of transmission message is received in large amount with a high speed, even if the value of this transmission message is equal to or greater than the corresponding threshold value, this message is abandoned without being queued. This is because the transmission message is sorted by being monitored in units of a flow by the input transmission-message monitoring points 11a and 12a and output transmission-message monitoring points 14b and 15b. Therefore, other flow transmission-messages are transferred through the node apparatus 1 without being abandoned and are transmitted from the output interface parts 14 and 15.

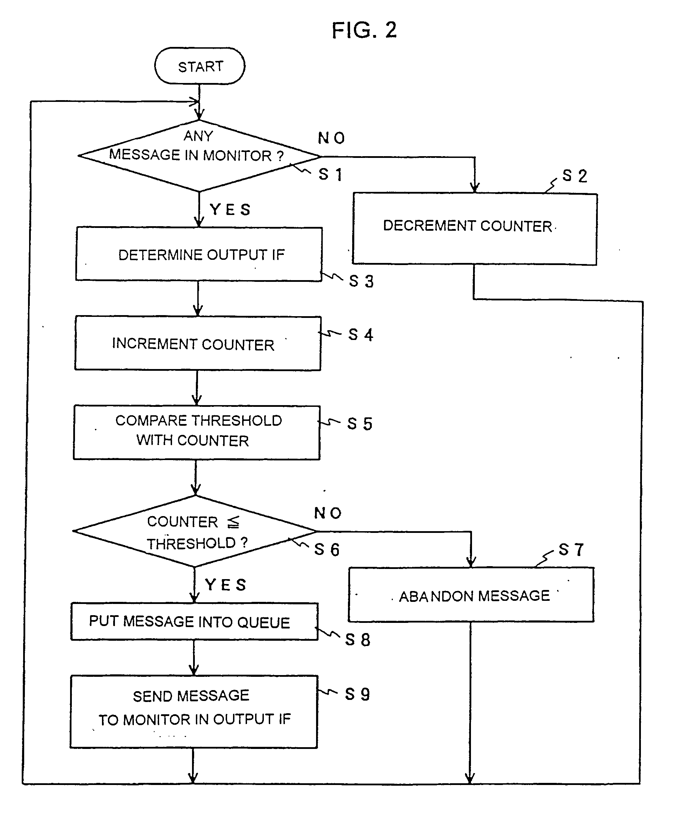

Fig. 2 is a flowchart showing the operation of the node apparatus 1 according to the embodiment of the present invention. The operation of the node apparatus 1 according to the embodiment of the present invention will be explained with reference to these Figs. 1 and 2.

In the node apparatus 1, before the queues 11b and 12b within the respective interface parts 11 and 12 there are disposed the input transmission-message monitoring points 11a and 12a. After, or at the back of, the queues 14a and 15a within the respective output interface parts 14 and 15 there are disposed the output transmission message monitoring points 14b and 15b.

The transmission messages received by the input interface parts 11 and 12 are input to the input transmission-message monitoring points 11a and 12a, in which according to the inside-transmission-message information (input interface /transmission origin / transmission destination or addressee) the flow is discriminated with reference to the control table 16a. Correspondingly to the discriminated flow-type, the output interface parts 14 and 15 are determined (steps S1 and S3 in Fig. 2).

At this time, in the switch controller 16, by a value corresponding to the length of the transmission message regarding that the output interface parts 14 and 15 are determined, addition-counting of the per-flow counter 16b is performed (step S4 in Fig. 2).

The counted value of the addition-counted per-flow counter 16b is compared with the threshold value within the control table 16a (step S5 in Fig. 2). If determined as being equal to or smaller than the threshold value (step S6 in Fig. 2), the relevant transmission message is input to the queues 11b and 12b (step S8 in Fig. 2). Then, this relevant transmission message is transferred through the interior of the node apparatus 1 by way of the switch 13 and is sent to the output transmission-message monitoring points 14b and 15b of the determined output interface parts 14 and 15 (step S9 in Fig. 2).

At this time, in the switch controller 16, by a value corresponding to the length of the transmission message sent to the output transmission-message monitoring points 14b and 15b, subtraction-counting of the per-flow counter 16b is performed (step S2 in Fig. 2).

The transmission message that has arrived in a large amount which is greater than the threshold value (step S6 in Fig. 2) is abandoned without being input to the queues 11b and 12b even if the length is equal to or greater than that threshold value. Accordingly, a transmission message that comes in next becomes able to be input to the queues 11b and 12b.

By the node apparatus being equipped with the above-described function, managing of the queues within the entire apparatus becomes possible, whereby it becomes impossible that all queues within the apparatus including the queue 13a within the switch 13 will be occupied by a specified kind of transmission message. In this embodiment, by merely adding a simple counter function (per-flow counter 16b) to the existing node apparatus 3, the transmission message is managed in units of a flow every transmission origin /addressee. Therefore, it is possible to prevent a specified kind of transmission message from occupying the queues as a whole.

Also, by using the counter function (per-flow counter 16b), it becomes unnecessary to prepare a large amount of queues and in hence it becomes possible to reduce the amount of memory used. Further, it becomes possible to specify a management queue by changing the disposition and combination of the input transmission-message monitoring points lla and 12a and output transmission-message monitoring points 14b and 15b as desired. Furthermore, only by performing setting of the control table 16a as desired, it becomes possible to easily change the setting on a scale as measured in units of a flow.

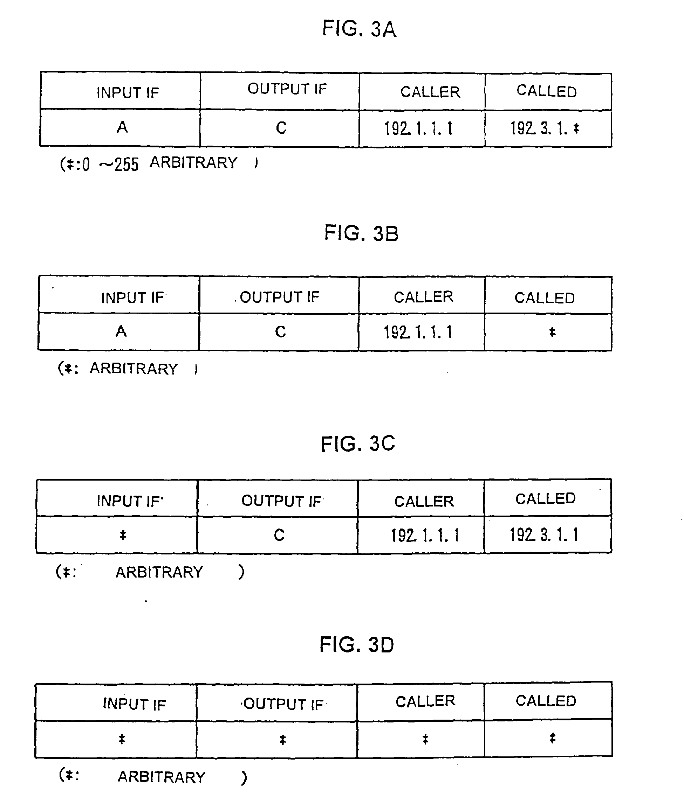

Figs. 3A to 3D are tables showing an example of the definition made in the control table 16a of Fig. 1. In the definition shown in Fig. 3A, the transmission messages, for example, the transmission origins of that each are "192. 1. 1. 1.", the input interfaces of that each are "A", and the transmission destinations or addresses of that each are "192, 3. 1. 1" or "192. 3. 1. 2" or the like, and that therefore each are destined for a local network "192. 3. 1. ^{*}", are each discriminated as being the same flow. Therefore, those transmission messages are equally counted in the same way. As a result of this, controlling the transmission messages in units of a local network becomes possible. With regard to the transmission origin as well, the same applies thereto.

Also, in the definition shown in Fig. 3B, if the transmission origins of transmission messages are each "192. 1. 1. 1" and the input interfaces thereof are each "A", whatever the addresses thereof may be, these transmission messages are each discriminated as being the same flow and are equally counted in the same way. Thereby, controlling in units of the transmission origin becomes possible. In the case of transmission messages the transmission origins of that each are "^{*} "IP (Internet Protocol) address" as well, the same applies thereto.

Further, in the definition shown in Fig. 3C, if the transmission origins of transmission messages are each "192.1. 1.1" and the transmission destinations thereof are each "192. 3. 1. 1", whatever the input interfaces thereof may be, these transmission messages are each discriminated as being the same flow and equally counted in the same way. Thereby, controlling in units of the transmission destination becomes possible.

Furthermore, in the definition shown in Fig. 3D, all of the transmission messages that have come over into the node apparatus are each discriminated as being the same flow and are equally counted in the same way. Thereby, controlling the apparatus as a whole becomes possible. As described above, since using a plurality of "^{*}'s" simultaneously is possible, various kinds of setting become able to be made.

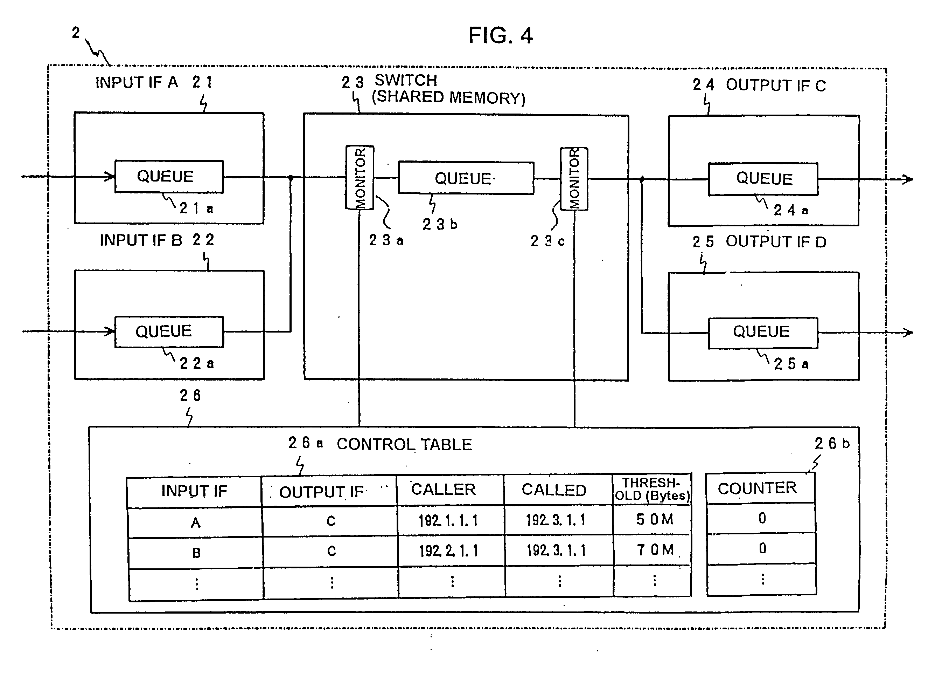

Fig. 4 is a block diagram showing the construction of the node apparatus according to another embodiment of the present invention. In Fig. 4, in the node apparatus 2 according to another embodiment, it is constructed that before and after the queue 23b within the switch 23 transmission-message monitoring points 23a and 23c that operate in units of a flow. This construction is different from the node apparatus 1 according to the preceding embodiment of the invention shown in Fig. 1, in which by allotting a threshold value with respect to each of all the queues within the apparatus each of these queues is managed at the entrance (input interface parts 11 and 12) of the apparatus.

It is arranged that the transmission messages received by the input interface parts 21 and 22 are transferred to the switch 23. At the input transmission-message monitoring point 23a, according to the information contained in the transmission message flow discrimination is performed referring to the control table 26a. And a determination is made of the output interface parts 24 and 25 correspondingly to the result of the flow discrimination.

At this time, in the switch controller 26, addition counting of the per-flow counter 26b is performed to an extent that corresponds to the length of the relevant transmission message. After passing through the queue 23b, in the output transmission-message monitoring point 23c, subtraction counting of the per-flow counter 26b is performed to an extent that corresponds to the length of the transmission message. The transmission message that has come over in at a rate higher than that corresponding to the threshold value is abandoned at the inlet of the queue 23b within the switch 23. Accordingly, the transmission message becomes able to enter into the queue 23b.

By the node apparatus being equipped with the above-described functions, it becomes possible to manage the queue 23b within the switch 23, with the result that the queue 23b within the switch ceases to be occupied by the transmission message. As described above, by changing the disposition position of the transmission-message monitoring points 23a, 23c, it becomes also possible to designate the range of queues that are to be managed.

## Claims

1. A node apparatus for switching a message, comprising:
a switch (13;23) for switching messages;
characterized by:
one or more input monitoring points (11a,12a; 23c) for monitoring the input of messages;
one or more output monitoring points (14b,15b; 23a) for monitoring the output of messages;
a counter (16b; 26b) for counting the length of messages accumulated in the input monitoring points and the output monitoring points; and
a control unit (16; 26) for abandoning a message when the counted length has exceeded a prescribed threshold value.

2. The node apparatus according to claim 1, wherein the counter (16b, 26b) executes addition or subtraction of the length of the message, on the basis of the monitored results of the input monitoring points and the output monitoring points.

3. The node apparatus according to claim 1 or 2, wherein the input monitoring points (11a,12a) are disposed in the input interfaces, and the output monitoring points (14b,15b) are disposed in the output interfaces.

4. The node apparatus according to claim 1 or 2, wherein the input monitoring point (23a) is disposed on an input side of the switch and the output monitoring point (23c) is disposed on an output side of the switch.

5. The node apparatus according to any of claims 1 to 4, wherein the counter (16b; 26b) counts the length of the flow containing one or more messages.

6. The node apparatus according to claim 5, wherein the flow is identified by the input interface, the output interface, a transmitter, and a receiver of the messages.

7. A queuing method for messages inputted and outputted from a node apparatus, characterized by the steps of:
monitoring messages inputted into the node;
monitoring messages outputted from the node;
counting the length of the messages on the basis of the monitoring; and
abandoning a message when the counted value has exceeded a preset threshold value.

8. The queuing method according to claim 7, wherein the counting step includes the steps of adding and subtracting the length of the message on the basis of the result of the monitoring.

9. The queuing method according to claim 7 or 8, wherein the length of the flow containing one or more messages is counted in the counting step.

10. The queuing method according to claim 9, wherein the flow is identified by the input interface, the output interface, a transmitter, and a receiver of the messages.
